# EUROPEAN PATENT SPECIFICATION

(11) **EP 3 106 529 B1**
(45) Date of publication and mention of the grant of the patent: **18.10.2017**
(21) Application number: 16174693.8
(22) Date of filing: 16.06.2016
(51) Int. Cl.: C22B 1/00, C22B 7/00, C22B 15/00, C22B 21/00

(54) **METHOD AND PLANT OF TREATING AND SMELTING METALS**
VERFAHREN UND ANLAGE ZUM VERHÜTTEN VON METALLEN
PROCÉDÉ ET DISPOSITIF POUR LA FUSION DE MÉTAUX

(30) Priority: 19.06.2015 IT UB20151558
(43) Date of publication of application: 21.12.2016
(73) Proprietor: Fecs Partecipazioni S.p.A., 24049 Verdellino (BG) (IT)
(72) Inventor: FOGLIENI, OLIVO, 24040 CISERANO (BG) (IT)
(74) Representative: Gatti, Enrico

(56) References cited:
- GB-A- 1 332 974
- GB-A- 2 477 753
- US-A- 4 548 651
- US-A1- 2005 284 261
- US-A1- 2010 224 109

## Description

The present invention concerns a method and plant of treating and smelting metals.

In particular, the present invention can be applied to the treatment and smelting of metal contaminated by humidity and/or waste and residues of organic material.

Even more in particular, the present invention can be applied in the treatment and smelting of metal deriving from machining scrap or from the metal fraction of municipal solid waste or other.

For example, during machining (such as milling, for example) metal swarfs are produced which are contaminated by lubrication and cooling liquids consisting of emulsions of water and mineral oils. Again, with reference to the metal fraction of municipal solid waste, it can comprise metal pieces closely coupled with materials like paper or plastic.

When the metal material is contaminated by water and/or organic residues, it is not advisable to use it directly in the smelting process because these residues could cause blisters or defects, reduce yield with respect to non-contaminated metal and also combustion phenomena which can be very dangerous since they are uncontrollable.

One of the measures for avoiding the drawbacks described is to dry and purify the contaminated metal by means of a dryer or pyrolyzer. For said purpose, the contaminated metal material is subjected to a flow of hot gas with a controlled quantity of oxygen while it is rotated. The hot gas consists of the fumes generated following combustion.

In detail, the pyrolyzer further comprises a rotating drum inside which the metal material is placed and rotated.

The burner is positioned directly upstream of the drum.

The induced heating causes evaporation of the water and evaporation and/or sublimation of the organic residues.

The metal thus treated, dry and without organic residues, is sent to a smelting furnace where it is melted.

The hot gas coming out of the pyrolyzer is conveyed towards a disposal device which comprises an afterburner. In fact, the hot gas can contain polluting and/or poisonous substances which must be destroyed, for example dioxin, furans or carbon monoxide.

These substances are destroyed by high temperature combustion of the hot gas flowing out of the pyrolyzer.

The fumes coming out of the post-combustion chamber are sent to a cyclone for suppression of the dust and then disposed of in the atmosphere via a chimney.

Alternatively, the fumes can be taken in upstream of the pyrolyzer to integrate the flow of hot drying gas.

For example, document GB 1 332 974 discloses a furnace for refining metal chips to eliminate organic impurities from the chips and for the partial reduction of iron oxides comprises a rotating drum having a refractory lining and internal helical blades, a charging machine for feeding metal chips into the upper end of the drum, a combustion chamber accommodating natural gas burners in communication with the lower end of the drum, and a recuperator coupled by tubes to the burners for supplying preheated air to the burners. The invention is particularly applicable in large size machine building plants where large amounts of waste metal in the form of chips result from machining steel and cast iron workpieces.

It should be noted that the gas flowing out of the pyrolyzer can contain a significant fraction of metal particulate which, once the humidity has been removed, becomes volatile and is conveyed by the hot gas flow. Consequently, the particulate is introduced into the afterburner and is burnt.

Disadvantageously, this causes two very important problems.

The first is due to the fact that the combustion of some metals is strongly exothermic, causing reactions which are difficult or impossible to control in the afterburner.

This phenomenon is particularly evident in the case of aluminium. This makes it impossible to control the temperature of the gases flowing out of the afterburner, and causes considerable safety problems as the afterburner is generally small and therefore has a low thermal inertia.

The second drawback lies in the fact that all or almost all the metal particulate is burnt, as it cannot be recovered, and is therefore wasted.

In this context, the technical aim of the present invention is to propose a method and plant of treating and smelting metals which overcome the drawbacks of the above known art.

In particular, one object of the present invention is to make available a method and a system for the treatment and smelting of metals which allow operation in complete safety, avoiding waste of metal material.

The technical aim stated and the object specified are substantially achieved by a method and plant of treating and smelting metals comprising the technical characteristics described in one or more of the attached claims.

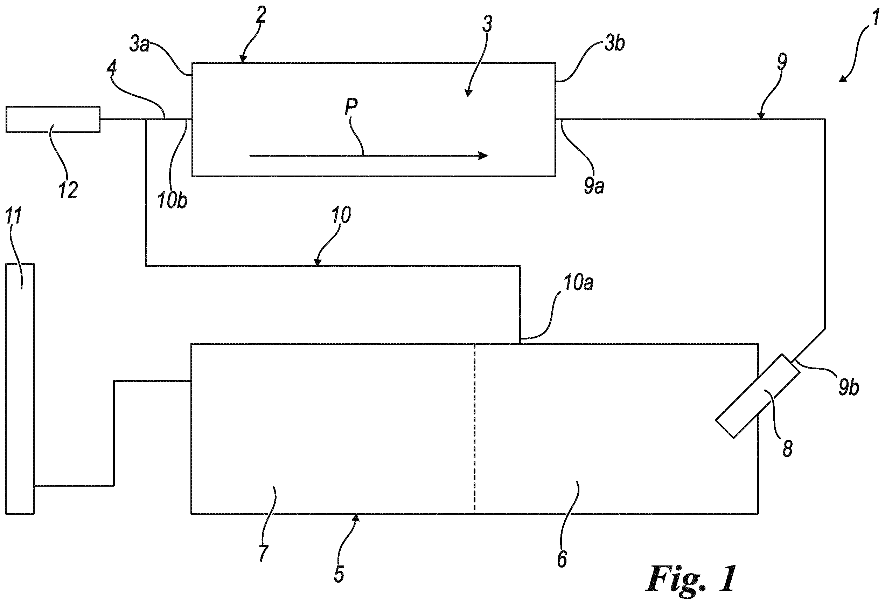

Further characteristics and advantages of the present invention will appear clearer from the indicative, and therefore non-limiting, description of a preferred but not exclusive embodiment of a method and a system for the treating and smelting metals, as illustrated in the attached figure 1 which shows a schematic view of a system for the treating and smelting metals according to the present invention.

With reference to the attached figure, the number 1 indicates overall a system for the treatment and smelting metals according to the present invention.

The system 1 implements a method for the treating and smelting metals according to the present invention.

The system 1 comprises a pyrolyzer 2 in which a pre-defined quantity of contaminated metal is introduced in the form of grains, swarfs or small pieces.

The metal can be contaminated by water and organic residues, such as mineral oils, plastics, paper, food residues and other.

The pyrolyzer 2, which is also known as *decoater* or *delaquering,* comprises a drum 3 rotating around its own main longitudinal axis. The metal material is introduced through an inlet section 3a and comes out through an outlet section 3b, following a path "P" during rotation of the drum 3.

The pyrolyzer 2 further comprises a device for the delivery 4 of a hot gas which blows said hot gas into the drum 3.

The system 1 further comprises a smelting furnace 5 which comprises at least one chamber into which the metal is introduced and melted.

In the embodiment illustrated, the smelting furnace 5 is of the type with dual chamber. In detail, the smelting furnace 5 comprises a low temperature chamber 6 and a high temperature chamber 7 in fluid connection with the low temperature chamber 6.

The smelting furnace 5 further comprises a burner 8 positioned in the area of the low temperature chamber 6. In greater detail, the burner 8 is positioned inside the low temperature chamber 6. The burner 8 serves to regulate the temperature inside the low temperature chamber 6.

If the metal to be melted is aluminium, the temperature inside the low temperature chamber 6 ranges from 350°C to 700°C.

Furthermore, the smelting furnace 5 comprises heating means (not illustrated) associated with the high temperature chamber 7.

If the metal to be melted is aluminium, the temperature inside the high temperature chamber 7 ranges from 700°C to 1000°C.

It should be observed that, although the system 1 preferably comprises a dual chamber smelting furnace, the invention can also be applied in the case of a single chamber furnace.

According to the present invention, the system 1 further comprises a disposal duct 9 directly connected between the pyrolyzer 2 and the smelting furnace 5.

In other words, the disposal duct 9 connects the pyrolyzer 2 and the smelting furnace 5 without the interposition of any further device.

In detail, the disposal duct 9 has a first end 9a at the drum 3, in the area of the outlet section 3b, and a second end 9b fixed in the area of the burner 8 of the smelting furnace 5.

The hot gas is conveyed into the disposal duct 9 and, after coming into contact with the metal contained in the pyrolyzer 2, flows out of the drum 3 and contains vaporized or sublimated organic material. According to the description, the disposal duct 9 conveys the flow of hot gas flowing out of the pyrolyzer 2 directly to the burner 8 of the smelting furnace 5 to be mixed with a fuel (which can be methane for example) and a combustive agent and burnt with it.

Means for movement of the gas flow (not illustrated) are positioned along the disposal duct 9. By way of example, the movement means comprise at least one fan.

It should be observed that in this case combustion of the flow of hot gases takes place inside the low temperature chamber 6 of the smelting furnace 5.

The hot gases flowing out of the pyrolyzer 2 contain substances, deriving from sublimation of the organic residues, which, even after combustion in the low temperature chamber 6, can be very dangerous for the environment and health and must be eliminated by subjecting them to a high temperature for a predefined period of time in the presence of an adequate quantity of oxygen.

Furthermore, the flow of hot gases coming out of the pyrolyzer 2 contains a significant portion of volatile metal particulate, in addition to the already cited substances deriving from pyrolyzation of the organic residues. Said particulate, once it has reached the burner 8, burns at least partly, producing energy in the form of heat which is then supplied to the low temperature chamber 6 of the smelting furnace 5.

It should be noted that if combustion of the portion of volatile metal particulate is not complete, the non-combusted part falls into the low temperature chamber 6.

In other words, the entire portion of volatile metal particulate is recovered in the form of energy or material.

Advantageously, the delivery device 4 of the flow of hot gases comprises a recovery duct 10 connected directly between the smelting furnace 5 and the pyrolyzer 2.

In detail, the recovery duct 10 has a first end 10a connected to the smelting furnace 5. More precisely, the first end 10a of the recovery duct 10 is preferably connected to the low temperature chamber 6 of the smelting furnace 5.

Furthermore, the recovery duct 10 has a second end 10b connected to the drum 3 of the pyrolyzer and in particular in the area of the inlet section 3a of the drum 3.

The recovery duct 10 conveys at least partly the fumes generated in the furnace 5 into the pyrolyzer 2. In this case, the fumes generated in the furnace 5 constitute the inflow of hot gases into the drum 3 of the pyrolyzer 2.

In particular, the recovery duct 10 can convey at least partly the fumes generated in the low temperature chamber 6 and/or in the high temperature chamber 7 of the smelting furnace 5.

Means for movement of the gas flow (not illustrated) allow the gas to flow along the recovery duct 10. By way of example, the movement means comprise at least a fan.

The smelting furnace 5 further comprises a pump (not illustrated) positioned between the low temperature chamber 6 and the high temperature chamber 7 to transfer at least a part of the melted metal from the high temperature chamber 7 to the low temperature chamber 6.

The fumes in the high temperature chamber 7, subject to the operating temperatures present in said chamber, are oxidised so as to destroy the toxic residues such as dioxin, furans or carbon monoxide.

A chimney 11 is connected to the high temperature chamber 7 to emit the treated fumes into the atmosphere.

The system 1 further comprises a combustor 12 arranged upstream of the pyrolyzer 2 and in line with the delivery device 4. It can generate, if necessary, a part of the flow of hot gases to increase the temperature of the fumes coming from the furnace 5.

The system 1 can further comprise a heat exchanger (not illustrated) to reduce the temperature of the fumes coming from the furnace 5 if said temperature is excessive.

As said, the invention also concerns the metal treatment and smelting method.

The method comprises the step of providing the predefined quantity of contaminated metal in the form of grains, swarfs or pieces.

It should be observed that the contaminated metal provided for treatment and smelting can consist of pieces which are very different from one another in terms of shape and dimensions.

Purely by way of example, the method of the present invention can be advantageously applied also in the case of minimum pieces measuring less than one millimetre.

The contaminated metal is subject to a pyrolyzation treatment to cause evaporation of the water and sublimation of all the organic residues.

For said purpose, the contaminated metal is placed in the pyrolyzer 2.

A flow of hot gas is then blown into the pyrolyzer 2 so as to raise the temperature of the metal to determine the pyrolyzation and purify the metal.

Preferably, but not exclusively, the metal present in the drum 3 is moved during the hot gas blowing step. In detail, the drum 3 is rotated during the blowing step.

After the hot gas blowing step, and therefore after the step of pyrolyzation of the contaminated metal, the purified metal is poured into the smelting furnace 5.

According to the preferred embodiment, the purified metal is poured into the low temperature chamber 6 of the smelting furnace 5. According to the invention, the method comprises the step of conveying the hot gas which, after the blowing step, flows out of the pyrolyzer 2 directly towards the burner 8 of the smelting furnace 5. The temperature of the flow of hot gas coming out of the pyrolyzer 2 ranges from 350°C to 550°C.

In other words, during the passage from the pyrolyzer 2 to the burner 8 of the smelting furnace 5, the hot gas does not undergo any further treatment.

Having reached the burner 8, the flow of hot gas is mixed with a fuel and a combustive agent to be burnt inside the low temperature chamber 6, generating energy.

As already said above, the step of burning the hot gas coming from the pyrolyzer 2 is necessary for the correct disposal of said gas, destroying the harmful substances.

Furthermore, it should be reiterated that also the volatile metal particulate generated in the pyrolyzation step is conveyed directly into the low temperature chamber of the smelting furnace 5 and is partly burnt there, while the non-combusted part falls back into the metal being melted in the low temperature chamber 6. Advantageously, the method further comprises the step of conveying, at least partly, the fumes generated in the smelting furnace 5 towards the pyrolyzer 2. In practice, therefore, the fumes generated in the low temperature chamber 6 of the smelting furnace 5 constitute the hot gas delivered and blown into the pyrolyzer 2.

The method further comprises the step of introducing a further flow of hot gas into the pyrolyzer 2 to integrate, if necessary, the temperature of the flow of hot gas coming from the low temperature chamber 6 through the recovery duct 10.

This step is performed through the combustor 12 which, by burning a fuel (which can be methane, for example) generates the further flow of hot gas.

It should be specified here that, if the metal to be treated and melted is aluminium, the temperature of the hot gas flowing into the pyrolyzer 2 ranges from 350°C to 550°C.

Therefore, in this case, the value of the reference temperature is 350°C.

Part of the fumes produced by combustion of the burner 8 in the low temperature chamber 6 are transferred to the high temperature chamber 7 where, due to the above-mentioned high temperatures present in said environment, they undergo an oxidisation treatment which, in the presence of the high operating temperatures present here, in addition to an adequate quantity of oxygen (which, by way of example, must preferably have a concentration of at least 1%) completely destroys the toxic substances such as dioxin, furans and carbon monoxide. The fumes thus treated are then discharged into the environment through the chimney 11.

The quantity of oxygen present in the smelting furnace 5 can be controlled.

In this regard, the method entails the step of measuring the temperature of the flow of hot gas coming from the low temperature chamber 6. The temperature value detected is therefore compared with a temperature reference value.

When the temperature value measured is below the reference temperature value, the step of generation and inlet of the further flow of hot gas is started, by starting the burner.

Preferably, but not exclusively, the metal treated and melted with the method and the system subject of the present invention is aluminium. It should be underlined that the method and the system described here can be used with any metal. In this case, however, the temperatures indicated will be different and will naturally depend on the metal in question.

The invention described achieves the proposed purpose and offers important advantages.

According to the above, the hot gas containing the pyrolyzed organic residues coming out of the pyrolyzer is disposed of directly inside the smelting furnace.

Therefore, when the fine metal particulate and the pyrolyzed organic residues contained in said gas are burned, the strongly exothermic combustion reaction takes place inside the smelting furnace which has a significant thermal inertia.

This avoids combustion of the volatile metal particulate causing uncontrollable phenomena which can jeopardize the safety of the system and the operators in charge. In other words, by disposing of the gases containing the metal particulate in the furnace, uncontrollable leaps in the combustion temperature no longer occur. This also means that the method and the system described according to the present invention can treat metals in the form of swarfs or grains with granulometry of even less than 1 mm. Moreover, as said above, by disposing of the gases containing the metal particulate directly in the smelting furnace, it is possible to completely recover the metal particulate as energy, to the extent that said metal burns, or as a material, to the extent that said metal does not burn.

More generally, the method and plant subject of the present invention, as described above, allow complete recovery of the energy contained in the hot gas flowing out of the pyrolyzer, both in terms of thermal energy and in terms of chemical energy deriving from the pyrolyzed organic residues and from the metal particulate.

Since the system described is without a specific device for disposal of the gas flowing out of the pyrolyzer, the system as a whole is simpler in terms of construction, use and maintenance.

Furthermore, by directly recovering the thermal energy of the fumes generated in the smelting furnace to use it in the pyrolyzer, the energy efficiency of the method and the system described is significantly increased. Naturally, said increase translates into a considerable saving in terms of energy and money.

## Claims

1. A method of treating and smelting metals comprising the steps of:
- providing a predefined quantity of contaminated metal in grains, swarfs or pieces;
- placing said contaminated metal in a pyrolyzer (2);
- blowing through said contaminated metal a flow of hot gas into the pyrolyzer (2) to evaporate and/or sublimate water and/or organic residues and purify said metal;
- transferring the purified metal, after the blowing step, into a smelting furnace (5);
- conveying said hot gas, after the blowing step, directly towards a burner (8) of said smelting furnace (5) to burn it.

2. A method according to claim 1, **characterized in that** the step of transferring the purified metal into the smelting furnace (5) comprises the step of transferring the purified metal into a low temperature chamber (6) of the smelting furnace; said burner (8) being positioned in the area of the low temperature chamber (6).

3. A method according to claim 1 or 2, **characterized in that** it further comprises the step of conveying, at least partly, the fumes generated in the smelting furnace (5) towards the pyrolyzer (2), the flow of hot gas consisting of said fumes.

4. A method according to any one of the preceding claims, **characterized in that** it further comprises the step of transferring at least a part of the fumes generated in the low temperature chamber (6) of the smelting furnace (5) to a high temperature chamber (7) of the smelting furnace (5) to subject said fumes to oxidization.

5. A method according to any one of the preceding claims, **characterized in that** it further comprises the step of moving the contaminated metal during the blowing step.

6. A method according to any one of the preceding claims, **characterized in that** it further comprises the step of introducing a further flow of hot gas into the pyrolyzer (2) during the blowing step.

7. A method according to claim 6, **characterized in that** it comprises the step of generating said further flow of hot gas; said step being performed by means of a combustor (12) positioned in the area of the pyrolyzer (2).

8. A method according to claim 7, **characterized in that** it further comprises the step of measuring the temperature of the flow of hot gas and comparing the temperature value measured with a temperature reference value.

9. A method according to claim 8, **characterized in that** the step of generating the further flow of hot gas is performed when the measured temperature of the flow of hot gas is below the temperature reference value.

10. A method according to any one of the preceding claims, **characterized in that** said metal is aluminium.

11. A system for the treatment and smelting of metals, comprising:
- a pyrolyzer (2) for the evaporation and/or sublimation of water and/or organic residues of a predefined quantity of contaminated metal in grains, swarfs or pieces; the pyrolyzer (2) comprising a delivery device (4) for delivering a flow of hot gas into the pyrolyzer (2);
- a smelting furnace (5) for smelting the purified metal; said smelting furnace (5) comprising a burner (8);
- a disposal duct (9) for disposing of the flow of hot gas from the pyrolyzer (2) to the smelting furnace (5) directly connected between the pyrolyzer (2), downstream of the latter, and the burner (8) of the smelting furnace (5).

12. A system according to claim 11, **characterized in that** the delivery device (4) of the flow of hot gas comprises a recovery duct (10) directly connected between the smelting furnace (5) and the pyrolyzer (2) upstream of the latter.

## Patentansprüche

1. Ein Verfahren zur Verarbeitung und Verhüttung von Metallen, welches jeweils folgende Schritte umfasst:
- die Bereitstellung einer vorbestimmten Menge von verschmutztem Metall in Körnern, Spänen oder Stücken;
- die Anordnung des genannten verschmutzten Metalls in einer Pyrolyse-Anlage (2);
- das Blasen eines heißen Gasstroms durch das genannte verschmutzte Metall in die Pyrolyse-Anlage (2), um Wasser und/oder organische Rückstände zu verdampfen und/oder sublimieren und das genannte Metall zu reinigen;
- den Transport des gereinigten Metalls nach dem Schritt des Durchblasens in einen Schmelzofen (5);
- die direkte Beförderung des genannten heißen Gasstroms nach dem Schritt des Durchblasens zu einem entsprechenden Brenner (8) des genannten Schmelzofens (5), um es dort zu verbrennen.

2. Ein Verfahren gemäß Anspruch 1, **dadurch gekennzeichnet, dass** der Schritt des Transportes des gereinigten Metalls in den Schmelzofen (5) den Schritt des Transportes des gereinigten Metalls in eine entsprechende Niedertemperaturkammer (6) des Schmelzofens umfasst; wobei der genannte Brenner (8) jeweils im Bereich der Niedertemperaturkammer (6) angeordnet ist.

3. Ein Verfahren gemäß den Ansprüchen 1 oder 2, **dadurch gekennzeichnet, dass** es desweiteren jeweils den Schritt der zumindest teilweisen Beförderung der in dem Schmelzofen (5) erzeugten Abgase in die Pyrolyse-Anlage (2) umfasst, wobei der Strom des heißen Gases aus den genannten Abgasen besteht.

4. Ein Verfahren gemäß einem beliebigen der vorausgegangenen Ansprüche, **dadurch gekennzeichnet, dass** es desweiteren den Schritt des zumindest teilweisen Transports der in der Niedertemperaturkammer (6) des Schmelzofens (5) erzeugten Abgase in eine Hochtemperaturkammer (7) des Schmelzofens (5) umfasst, um die genannten Abgase der Oxydierung zu unterziehen.

5. Ein Verfahren gemäß einem beliebigen der vorausgegangenen Ansprüche, **dadurch gekennzeichnet, dass** es desweiteren den Schritt der Bewegung des verschmutzten Metalls während des Blasvorgangs umfasst.

6. Ein Verfahren gemäß einem beliebigen der vorausgegangenen Ansprüche, **dadurch gekennzeichnet, dass** es desweiteren den Schritt der Einleitung eines zusätzlichen Stroms heißen Gases in die Pyrolyse-Anlage (2) während des Blasvorgangs umfasst.

7. Ein Verfahren gemäß Anspruch 6, **dadurch gekennzeichnet, dass** e den Schritt der Erzeugung des genannten zusätzlichen Stroms heißen Gases umfasst; wobei der genannte Schritt mit Hilfe eines Verbrenners (12) erfolgt, welcher jeweils im Bereich der Pyrolyse-Anlage (2) angeordnet ist.

8. Ein Verfahren gemäß Anspruch 7, **dadurch gekennzeichnet, dass** es desweiteren den Schritt der Messung der Temperatur des heißen Gasstroms sowie des Vergleichs des gemessenen Temperaturwertes mit einem entsprechenden Bezugstemperaturwert umfasst.

9. Ein Verfahren gemäß Anspruch 8, **dadurch gekennzeichnet, dass** der Schritt der Erzeugung des zusätzlichen heißen Gasstroms jeweils erfolgt, wenn die gemessene Temperatur des heißen Gasstroms unter dem entsprechenden Bezugstemperaturwert liegt.

10. Ein Verfahren gemäß einem beliebigen der vorausgegangenen Ansprüche, **dadurch gekennzeichnet, dass** es sich bei dem genannten Metall um Aluminium handelt.

11. Ein System zur Verarbeitung und Verhüttung von Metallen, das folgendes umfasst:
- eine Pyrolyse-Anlage (2) zur Verdampfung und/oder Sublimation von Wasser und/oder organischen Rückständen einer vorbestimmten Menge verschmutzten Metalls in Körnern, Spänen oder Stücken; wobei die Pyrolyse-Anlage (2) eine Einspeisevorrichtung (4) zur Einspeisung des heißen Gasstroms in die Pyrolyse-Anlage (2) umfasst;
- einen Schmelzofen (5) zum Verhütten des gereinigten Metalls; wobei der genannte Schmelzofen (5) jeweils einen Brenner (8) umfasst;
- eine Entsorgungsleitung (9) zur Entsorgung des heißen Gasstroms von der Pyrolyse-Anlage in den Schmelzofen (5), welche jeweils direkt zwischen der Pyrolyse-Anlage (2) stromabwärts des letzteren, und dem entsprechenden Brenner (8) des Schmelzofens (5) angeschlossen ist.

12. Ein System gemäß Anspruch 11, **dadurch gekennzeichnet, dass** die Einspeisevorrichtung (4) des heißen Gasstroms jewels eine Rückgewinnungsleitung (10) umfasst, welche direkt zwischen dem Schmelzofen (5) und der Pyrolyse-Anlage (2) stromaufwärts des letzteren angeschlossen ist.

## Revendications

1. Procédé de traitement et de fusion de métaux comprenant les étapes suivantes :
- la fourniture d'une quantité prédéfinie de métal contaminé en grains, en copeaux ou en morceaux ;
- la mise en place dudit métal contaminé dans un pyrolyseur (2) ;
- le soufflage à travers ledit métal contaminé d'un flux de gaz chaud dans le pyrolyseur (2) pour évaporer et/ou sublimer de l'eau et/ou des résidus organiques et purifier ledit métal ;
- le transfert du métal purifié, après l'étape de soufflage, dans un four de fusion (5) ;
- l'acheminement dudit gaz chaud, après l'étape de soufflage, directement vers un brûleur (8) dudit four de fusion (5) pour le brûler.

2. Procédé selon la revendication 1, **caractérisé en ce que** l'étape de transfert du métal purifié dans le four de fusion (5) comprend l'étape de transfert du métal purifié dans une chambre à basse température (6) du four de fusion ; ledit brûleur (8) étant positionné dans la zone de la chambre à basse température (6).

3. Procédé selon la revendication 1 ou 2, **caractérisé en ce qu'**il comprend en outre l'étape d'acheminement, au moins en partie, des fumées générées dans le four de fusion (5) vers le pyrolyseur (2), le flux de gaz chaud consistant en lesdites fumées.

4. Procédé selon l'une quelconque des revendications précédentes, **caractérisé en ce qu'**il comprend en outre l'étape de transfert d'au moins une partie des fumées générées dans la chambre à basse température (6) du four de fusion (5) à une chambre à haute température (7) du four de fusion (5) pour soumettre lesdites fumées à une oxydation.

5. Procédé selon l'une quelconque des revendications précédentes, **caractérisé en ce qu'**il comprend en outre l'étape de déplacement du métal contaminé durant l'étape de soufflage.

6. Procédé selon l'une quelconque des revendications précédentes, **caractérisé en ce qu'**il comprend en outre l'étape d'introduction d'un autre flux de gaz chaud dans le pyrolyseur (2) durant l'étape de soufflage.

7. Procédé selon la revendication 6, **caractérisé en ce qu'**il comprend l'étape de génération dudit autre flux de gaz chaud ; ladite étape étant effectuée au moyen d'une chambre de combustion (12) positionnée dans la zone du pyrolyseur (2).

8. Procédé selon la revendication 7, **caractérisé en ce qu'**il comprend en outre l'étape de mesure de la température du flux de gaz chaud et de comparaison de la valeur de température mesurée à une valeur de référence de température.

9. Procédé selon la revendication 8, **caractérisé en ce que** l'étape de génération de l'autre flux de gaz chaud est effectué quand la température mesurée du flux de gaz chaud est inférieure à la valeur de référence de température.

10. Procédé selon l'une quelconque des revendications précédentes, **caractérisé en ce que** ledit métal est l'aluminium.

11. Système pour le traitement et la fusion de métaux comprenant :
- un pyrolyseur (2) pour l'évaporation et/ou la sublimation d'eau et/ou de résidus organiques d'une quantité prédéfinie de métal contaminé en grains, en copeaux ou en morceaux ; le pyrolyseur (2) comprenant un dispositif d'alimentation (4) pour alimenter un flux de gaz chaud dans le pyrolyseur (2) ;
- un four de fusion (5) pour fondre le métal purifié ; ledit four de fusion (5) comprenant un brûleur (8) ;
- un conduit d'évacuation (9) pour évacuer le flux de gaz chaud du pyrolyseur (2) au four de fusion (5), connecté directement entre le pyrolyseur (2), en aval de ce dernier, et le brûleur (8) du four de fusion (5).

12. Système selon la revendication 11, **caractérisé en ce que** le dispositif d'alimentation (4) du flux de gaz chaud comprend un conduit de récupération (10) connecté directement entre le four de fusion (5) et le pyrolyseur (2) en amont de ce dernier.
